(19) Europäisches Patentamt / European Patent Office / Office européen des brevets

(11) **EP 3 356 283 B2**

(12) **NOUVEAU FASCICULE DE BREVET EUROPEEN**

Après la procédure d'opposition

(45) Date de publication et mention de la décision concernant l'opposition:
**28.12.2022 Bulletin 2022/52**

(45) Mention de la délivrance du brevet:
**03.07.2019 Bulletin 2019/27**

(21) Numéro de dépôt: 16790641.1

(22) Date de dépôt: **30.09.2016**

(51) Classification Internationale des Brevets (IPC):
**B66F 9/065** (2006.01)     **B66F 9/075** (2006.01)
**E02F 9/22** (2006.01)     **B62D 6/00** (2006.01)
**E02F 3/28** (2006.01)     **E02F 9/26** (2006.01)

(52) Classification Coopérative des Brevets (CPC):
**B66F 9/0655; B62D 6/00; B62D 6/001;
B62D 6/002; B66F 9/07568; E02F 3/286;
E02F 9/225; E02F 9/265**

(86) Numéro de dépôt international:
**PCT/FR2016/052511**

(87) Numéro de publication internationale:
**WO 2017/055774 (06.04.2017 Gazette 2017/14)**

(54) **VÉHICULE À BRAS TÉLESCOPIQUE**

FAHRZEUG MIT TELESKOPISCHEM ARM

VEHICLE WITH A TELESCOPIC ARM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2015 FR 1559356**

(43) Date de publication de la demande:
**08.08.2018 Bulletin 2018/32**

(73) Titulaire: **MANITOU BF
44150 Ancenis (FR)**

(72) Inventeurs:
• **RIOT, Antoine
44150 Ancenis (FR)**
• **CHRISTINY, Mickaël
44150 Ancenis (FR)**

(74) Mandataire: **Ipsilon
Europarc - Bat B7
3, rue Edouard Nignon
44300 Nantes (FR)**

(56) Documents cités:
| | |
|---|---|
| EP-A1- 1 236 638 | EP-A2- 1 593 642 |
| EP-B1- 2 276 689 | DE-A1- 10 008 984 |
| DE-A1- 10 355 933 | DE-A1-102013 008 979 |
| DE-C1- 19 645 651 | FR-A1- 3 041 922 |
| JP-A- 2015 168 294 | US-A- 5 265 019 |
| US-A1- 2004 016 594 | US-A1- 2006 006 020 |
| US-A1- 2006 232 025 | US-B1- 6 244 373 |

• **Hinton J. SHERYN et al.: "AN ILLUSTRATED HISTORY OF FORK-LIFT TRUCKS", 2000, Ian allan Publishing**
• **The Editors of Encyclopaedia Britannica: "Forklift truck", Encyclopaedia Britannica, 23 December 2014 (2014-12-23), Retrieved from the Internet: URL:https://www.britannica.com/technology/forklifttruck**
• **malpka303st: "@Forklift Training - 3T TRAINING LTD", YouTube, 14 September 2013 (2013-09-14), Retrieved from the Internet: URL:https://www.youtube.com/watch?v=JFTWBw C8128**
• **Atlanta Liquidation: "2002 CROWN RC 3000 SERIES ELECTRIC RYDER FORKLIFT MODEL RC3020 30 CAPACITY 4825 LBS", YouTube, Retrieved from the Internet: URL:https://www.youtube.com/watch?v=7e0iul VedTE**
• **Anonymous: "ANATOMY OF A FORKLIFT", Mitsubishi Caterpillar Forklift America Inc., Retrieved from the Internet: URL:https://www.mcfa.com/en/mcfa/resources /anatomy-of-a-forklift**

EP 3 356 283 B2

**Description**

**DOMAINE DE L'INVENTION**

La présente invention concerne de manière générale la modification du rapport de direction pour un véhicule roulant et un véhicule correspondant.

**ART ANTERIEUR**

Pour la manutention d'objets entre deux zones, il est connu d'utiliser un véhicule de manutention que le conducteur déplace en braquant les roues dans un sens pour atteindre une première zone, par exemple afin de prendre un chargement. Pour atteindre une deuxième zone de déchargement, le conducteur doit reculer puis avancer le véhicule en braquant les roues dans l'autre sens.

Cependant, pour braquer les roues dans un sens ou dans l'autre, c'est-à-dire pour amener les roues en butée dans un sens ou dans l'autre, le conducteur doit appliquer au volant de direction plusieurs tours, ce qui se révèle fastidieux et coûteux en temps.

En outre, lorsque le véhicule comprend un bras télescopique inclinable, par exemple muni d'un godet à son extrémité distale, le conducteur doit veiller à manoeuvrer prudemment le véhicule pour que le véhicule ne soit pas déséquilibré par le bras télescopique et qu'il ne risque pas de se renverser. EP1593642A2 décrit un système de direction pour véhicule avec un bras télescopique et un épandeur de conteneur.

De manière générale, il est souhaitable de pouvoir diriger un tel véhicule de manutention de manière précise, confortable et sécurisée.

La présente invention a pour but de proposer un véhicule roulant à bras télescopique permettant de palier à tout ou partie des problèmes exposés ci-dessus.

**RESUME DE L'INVENTION**

A cet effet, l'invention a pour objet un véhicule à bras télescopique inclinable, selon la revendication 1.

Lors d'une opération de manutention de charge avec un véhicule à bras télescopique inclinable dont l'extrémité est destinée à porter une charge, il existe un risque de basculement du véhicule dans le cas où celui-ci n'est pas piloté de manière sécurisée. Le calcul ou modification du rapport de direction en fonction d'un ou de paramètres liés au bras, dont l'angle et optionnellement la longueur dudit bras, permet de conserver un confort de manœuvre du véhicule tout en assurant des conditions de sécurité adaptées.

Selon une caractéristique avantageuse de l'invention, ledit système comprenant un capteur de charge configuré pour déterminer la charge à, ou au voisinage de, l'extrémité du bras télescopique, le module de commande du rapport de direction est configuré pour calculer le rapport de direction R en fonction de ladite charge déterminée.

Selon une caractéristique avantageuse de l'invention, ledit système comprenant un capteur de l'angle de direction du volant, le module de commande du rapport de direction R est aussi configuré pour calculer le rapport de direction en fonction d'un paramètre de manipulation du volant, de préférence calculé à partir de l'angle de direction du volant.

Le fait de pouvoir faire varier le rapport de direction en fonction de la manipulation du volant, de préférence en fonction de la vitesse angulaire du volant, permet d'adapter la sensibilité de la direction du véhicule aux conditions d'utilisation du véhicule.

En particulier, une telle conception permet de limiter le nombre de tour à appliquer au volant de direction pour amener les roues en butée dans un sens ou dans l'autre lorsque le conducteur souhaite braquer rapidement les roues.

On peut prévoir que le rapport soit diminué lorsque le volant est tourné rapidement. Inversement, lorsque le conducteur souhaite approcher précisément d'une zone et pour cela fait tourner lentement le volant, on peut prévoir que le rapport soit augmenté pour que le conducteur puisse conserver une précision de déplacement.

Le module de commande du rapport de direction est configuré pour calculer le rapport de direction R en fonction aussi de la vitesse de déplacement du véhicule.

Le rapport de direction R augmente à mesure que la vitesse de déplacement augmente pour tendre vers le rapport de direction par défaut. On entend par rapport de direction par défaut le rapport de direction qui résulte de la construction du véhicule sans activation du module de commande du rapport. Une telle conception facilite la manœuvre du véhicule à l'arrêt ou à faible vitesse de déplacement, tout en conservant une sécurité et un confort de conduite à plus haute vitesse pour limiter la nervosité du véhicule.

Selon une caractéristique avantageuse de l'invention, ledit module de commande du rapport de direction R est configuré pour calculer le rapport de direction en fonction de la vitesse angulaire du volant lorsque la vitesse du véhicule est dans une plage de vitesse donnée, dite plage de faible vitesse, le calcul de rapport de direction étant indépendant de la vitesse angulaire du volant au-delà de cette plage de vitesse ou l'influence de la vitesse angulaire du volant sur le rapport de direction étant réduite au-delà pour une vitesse de véhicule au-delà de cette plage de faible vitesse.

Selon une caractéristique avantageuse de l'invention, ledit module de commande du rapport de direction R est configuré pour calculer le rapport de direction en fonction de la vitesse angulaire du volant lorsque la vitesse du véhicule est dans une plage de vitesse, dite de faible vitesse, de 0 à 10 km/h, préférentiellement de 0 à 8 km/h, par exemple de 0 à 5 km/h. On peut encore prévoir que cette plage soit limitée à la plage 0 à 2 ou 3 km/h.

Préférentiellement, le rapport de direction est indépendant de la vitesse angulaire du volant au-delà de cette plage de faible vitesse ou l'influence de la vitesse angulaire du volant sur le rapport de direction est réduite pour une vitesse de véhicule au-delà de cette plage de faible vitesse.

On peut prévoir que la modification de rapport en fonction de la vitesse angulaire du volant s'applique sur toute la plage de vitesse véhicule, par exemple de 0 à 40 km/h. Mais comme expliqué ci-dessus, cette modification du rapport de vitesse peut être limitée à une gamme de vitesses du véhicule pour inhiber ou réduire l'influence de la vitesse angulaire du volant hors de cette plage pour des questions de sécurité.

Selon une caractéristique avantageuse de l'invention, ledit paramètre de manipulation du volant comprend la vitesse angulaire du volant.

Selon une caractéristique avantageuse de l'invention, ledit paramètre de manipulation du volant comprend l'accélération angulaire du volant.

Selon une caractéristique avantageuse de l'invention, ledit paramètre de manipulation du volant comprend la position angulaire du volant et/ou la course angulaire parcourue continûment.

Selon une caractéristique avantageuse de l'invention, plusieurs plages de vitesse angulaire étant définies, le rapport de direction présente des valeurs différentes d'une plage de vitesse angulaire à une autre et/ou obéit à des fonctions différentes d'une plage de vitesse angulaire à une autre. Cette configuration du système est aussi applicable lorsque le paramètre de manipulation du volant est un paramètre autre que la vitesse angulaire. Ce paramètre peut être par exemple l'accélération angulaire ou la position angulaire du volant.

Selon une caractéristique avantageuse de l'invention, le module de commande du rapport de direction est configuré de manière à calculer le rapport de direction de l'enfoncement de la pédale d'accélération.

Selon une caractéristique avantageuse de l'invention, le dispositif de transmission de direction comprend un circuit hydraulique.

Selon une caractéristique avantageuse de l'invention, le circuit hydraulique comporte:

- une pompe, encore appelée pompe accessoire, permettant de mettre en pression le circuit hydraulique ;
- un système de vérin hydraulique couplé aux roues directrices ;
- une pompe de direction permettant de diriger le liquide de direction d'un côté ou de l'autre du ou de chaque vérin du système de vérin hydraulique en fonction de la rotation du volant ;
- un système d'ajout de débit, de préférence une électrovanne proportionnelle, commandable par le module de commande pour ajouter un débit supplémentaire de liquide de direction dans le circuit hydraulique en fonction du rapport de direction défini par le module de commande.

Selon une caractéristique avantageuse de l'invention, le véhicule comprend un premier calculateur configuré pour traiter les données issues du ou des capteurs et piloter les actionneurs électriques du véhicule, et un deuxième calculateur connecté au premier calculateur et qui comprend ledit module de commande du rapport de direction.

Selon une caractéristique avantageuse de l'invention, ledit véhicule comprend quatre roues directrices.

## BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :

- la figure 1 est une vue schématique de dessus d'un système de modification de rapport de direction pour un véhicule roulant, conformément à un mode de réalisation de l'invention ;
- la figure 2 est une vue schématique de côté d'un véhicule de manutention, conformément à un mode de réalisation de l'invention, le véhicule comprenant un bras télescopique équipé d'un godet qui est représenté à l'état détaché de l'extrémité du bras.
- la figure 3 est un graphique donnant un exemple de courbe du rapport de direction principal en fonction de la vitesse de déplacement du véhicule, conformément à un mode de réalisation de l'invention ;
- la figure 4 est un graphique donnant un exemple de courbe d'un facteur de correction pour le calcul du rapport de direction, en fonction de la vitesse angulaire du volant, conformément à un mode de réalisation de l'invention ;
- la figure 5 est un graphique donnant un exemple de courbe d'un facteur de correction pour le calcul du rapport de direction, en fonction de l'angle que fait le bras télescopique du véhicule avec le sol, conformément à un mode de réalisation de l'invention.

## DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments de véhicule peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes. Les modes de réalisation qui suivent sont examinés, par souci de simplification, en relation avec la terminologie et la structure d'un véhicule roulant de manutention. Cependant, les modes de réalisation qui seront examinés ensuite ne sont pas limités à ces véhicules de manutention, mais peuvent être appliqués à d'autres véhicules roulant à bras télescopique.

Une référence dans toute la description, à « un mode de réalisation » signifie qu'une fonctionnalité, une structure, ou une caractéristique particulière décrite en relation avec un mode de réalisation est inclue dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

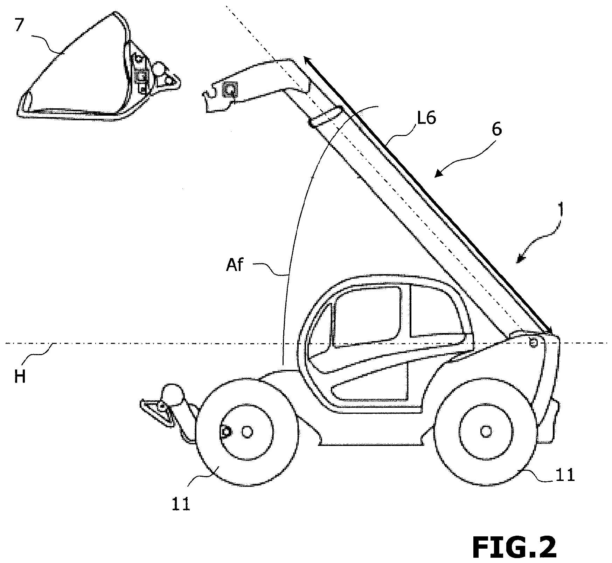

Selon un mode de réalisation particulier illustré à la figure 2, le véhicule est de type à bras télescopique. Le châssis du véhicule 1 porte un bras télescopique 6 articulé autour d'un axe sensiblement horizontal. Dans l'exemple illustré à la figure 2, le bras télescopique 6 est destiné à être équipé à son extrémité distale d'un godet 7. Le bras télescopique 6 est élevé ou abaissé en étant incliné selon un angle Af par rapport au plan horizontal H. Le bras télescopique 6 peut s'étendre ou se rétracter. Le bras présente alors une longueur L6. La longueur L6 et l'angle Af du bras télescopique sont mesurés par des capteurs raccordés à un calculateur du véhicule.

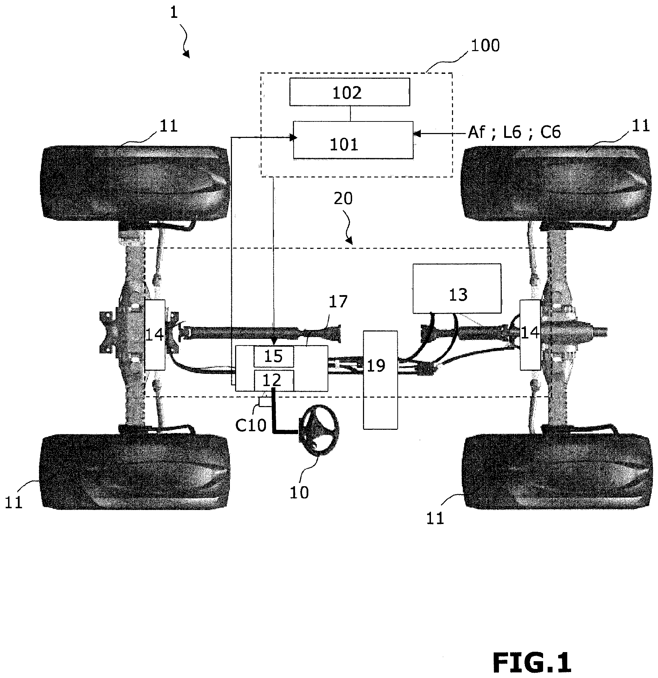

Selon un mode de réalisation illustré à la figure 1, le véhicule comprend aussi un volant 10 de direction et un capteur C10 de l'angle de direction du volant de manière à pouvoir calculer un paramètre représentatif de la manipulation du volant.

Le capteur C10 peut être agencé de manière à détecter l'angle de pivotement de la colonne de direction couplée au volant 10. Le capteur C10 permet de déterminer la vitesse angulaire du volant par dérivation de l'angle de pivotement.

Le capteur C10 est connecté à un calculateur 101 de gestion des organes du véhicule. L'acquisition de l'angle de pivotement du volant 10 en fonction du temps permet au calculateur 101, ou à un autre calculateur 102 raccordé audit calculateur 101, de calculer la position angulaire, la vitesse angulaire (ou vitesse de pivotement), l'accélération angulaire ou encore la course angulaire parcourue continument par le volant.

Dans l'exemple illustré aux figures, le véhicule roulant comprend quatre roues directrices. En variante, on peut prévoir que seules les roues avant du véhicule soient directrices. Au moins deux roues sont motrices. Les quatre roues peuvent être motrices de manière à permettre aux roues d'être dirigées selon une configuration en crabe pour pouvoir approcher précisément une zone donnée.

Le véhicule comprend un dispositif 20 de transmission de direction permettant de transmettre le mouvement de direction entre le volant 10 et les roues directrices 11. Ce mouvement est transmis selon un rapport de direction donné R, encore appelé rapport de direction. Le rapport de direction est défini par R = Alpha / Beta avec Beta l'angle de braquage des roues, et Alpha l'angle de braquage du volant.

Ainsi, lorsque le volant 10 est tourné d'un angle Alpha, le dispositif de transmission de direction fait pivoter les roues directrices 11 de l'angle Beta défini par le rapport de direction R.

Le dispositif 20 de transmission de direction forme ainsi avec le module de commande 102 du rapport de direction du calculateur, un système de démultiplication de direction variable permettant de faire varier le rapport entre l'angle de volant et l'angle de roue.

Le module de commande 102 du rapport de direction est configuré pour calculer (ou modifier) le rapport de direction en fonction d'un paramètre relatif au bras télescopique.

Ledit paramètre comprend l'angle Af formé par le bras télescopique avec le plan d'appui au sol des roues du véhicule. Ledit paramètre peut aussi comprendre la longueur L6 du bras télescopique. A cet effet le véhicule comprend un ou plusieurs capteurs, dont un capteur de l'angle Af formé par le bras télescopique avec le plan d'appui au sol des roues du véhicule, et optionnellement un capteur de la longueur L6 du bras télescopique.

Le module de commande 102 du rapport de direction R est configuré pour calculer le rapport de direction R en fonction de l'angle Af formé par le bras télescopique avec le plan d'appui au sol des roues du véhicule. Avantageusement, le rapport de direction R est aussi calculé en fonction de la longueur L6 du bras télescopique. Le plan d'appui au sol des roues du véhicule est usuellement le plan horizontal.

Le rapport de direction est augmenté lorsque l'angle et optionnellement la longueur augmente pour réduire le risque de renversement du véhicule (lorsque l'on considère les éventuels autres paramètres intervenant dans le calcul comme inchangés).

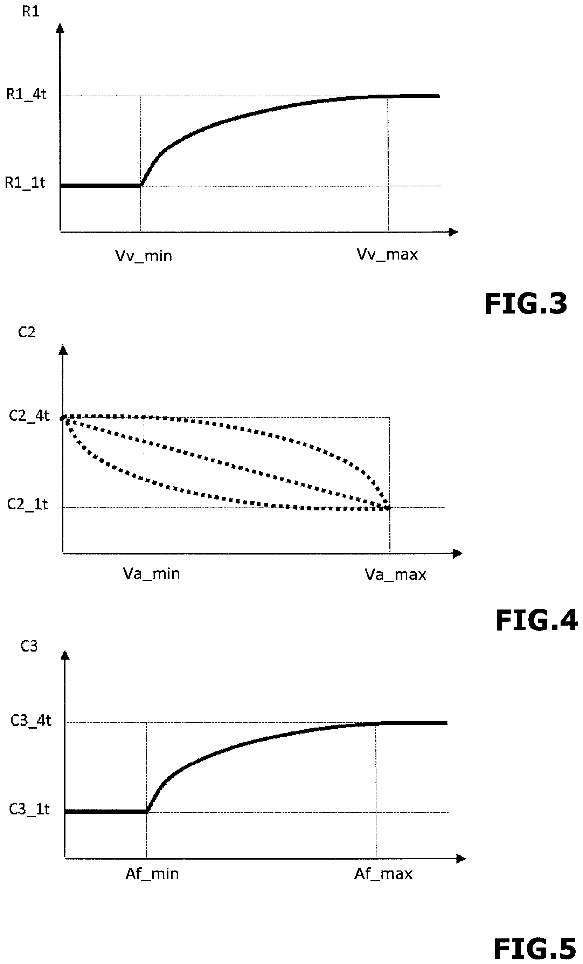

La description qui suit s'appuie sur l'angle de flèche, mais est bien entendu applicable à la longueur du bras en définissant une courbe croissante de C3 (figure 5) en fonction de la longueur du bras.

On peut ainsi prévoir que le rapport de direction appliqué soit du type R= C3. Dans l'exemple de la figure 5, la valeur de C3 croit depuis une valeur C3_1t, pour une valeur d'angle de flèche donné Af_min, appelée angle de flèche minimal, jusqu'à une valeur C3_4t, pour la valeur d'angle de flèche maximale Af_max qui est comprise par exemple entre 30 et 45 °, préférentiellement 35°. On peut prévoir que Af_min soit compris entre 5° et 25°, par exemple 15°.

Dans ce cas, la valeur C3_1t correspond à la nécessité d'effectuer un tour de volant pour braquer les roues d'un côté à l'autre, tandis que la valeur C3_4t correspond à la nécessité d'effectuer 4 tours de volant pour braquer les roues d'un côté à l'autre.

Dans l'exemple de la figure 5, la valeur de C3 est constante lorsque la valeur d'angle de flèche est comprise entre 0 et Af_min. Dans l'exemple de la figure 5, la courbe de C3 est de type logarithmique à partir de Af_min. Bien entendu d'autres allures de courbe peuvent être envisagées.

Autrement dit, en considérant que les éventuels autres paramètres de calcul sont inchangés, le rapport de direction est faible lorsque l'angle de flèche est faible, et est plus élevé lorsque l'angle de flèche est plus important.

Ainsi, la prise en compte de l'angle de flèche permet d'augmenter la valeur du rapport de direction lorsque l'angle dépasse la valeur Af_min, ce qui permet d'améliorer encore la sécurité de manoeuvre du véhicule, en évitant un renversement dudit véhicule.

La valeur du rapport de direction est aussi déterminée en fonction d'un ou plusieurs autres paramètres, dont la vitesse de déplacement du véhicule comme détaillé ci-après.

Le module de commande 102 du rapport de direction R est configuré de manière à modifier le rapport de direction R en tenant compte aussi de la vitesse de déplacement du véhicule. La vitesse de déplacement du véhicule peut être transmise au module de commande 102 par le calculateur 101 du véhicule.

Le rapport de direction R à appliquer est calculé sur la base d'un rapport de direction, dit principal ou standard, noté R1 qui est fonction de la vitesse du véhicule Vv, auquel est appliqué C3 en tant que facteur de correction qui est fonction de l'angle de flèche. Autrement dit, le rapport de direction R à appliquer est calculé avec une formule du type :

$$R = R1 * C3$$

Dans l'exemple illustré à la figure 3, qui est un graphique donnant la courbe du rapport de direction principal, noté R1, en fonction de la vitesse de déplacement du véhicule, notée Vv, le rapport de direction principal R1 est maintenu à une valeur constante (la valeur minimale R1_1t), de 0 km/h (arrêt du véhicule) jusqu'à une valeur de vitesse donnée, notée Vv_min. Dans l'exemple illustré, la valeur minimale R1_1t correspond au fait que le conducteur doit effectuer seulement un tour de volant pour braquer les roues en butée d'un côté à l'autre.

Au-delà de la vitesse Vv_min, la valeur de R1 augmente jusqu'à atteindre pour Vv_max une valeur maximale R1_4t correspondant dans l'exemple illustré au fait de devoir faire 4 tours de volant pour braquer les roues en butée d'un côté à l'autre. L'augmentation de R1 avec la vitesse permet d'augmenter la valeur du rapport de direction R à appliquer et ainsi d'augmenter le déplacement angulaire du volant à effectuer pour braquer les roues, ce qui améliore la sécurité de conduite.

Dans l'exemple de la figure 3, la courbe de R1 est de type logarithmique à partir de Vv_min. Bien entendu d'autres allures de courbe peuvent être envisagées.

Selon ce mode de réalisation, C3 est utilisé comme un facteur de correction qui est fonction de la valeur angulaire de la flèche. On peut à titre d'exemple fixer la valeur C3_1t à 1 et la valeur C3_4t à 4.

Ainsi, la prise en compte de l'angle de flèche permet d'augmenter la valeur du rapport de direction lorsque l'angle dépasse la valeur Af_min, ce qui permet d'améliorer encore la sécurité de manoeuvre du véhicule, en évitant un renversement dudit véhicule, en particulier lorsque la vitesse du véhicule augmente.

Ainsi, à l'arrêt ou à très faible vitesse, c'est-à-dire pour une vitesse du véhicule inférieure à Vv_min, et lorsque l'angle de flèche est faible, par exemple pour une valeur Af inférieure à Af_min, le rapport de direction R est calculé en corrigeant la valeur de R1 (qui est alors proche de ou égale à R1_1t, ce qui correspond à une nécessité d'effectuer seulement 1 tour de volant pour braquer les roues en butée d'un côté à l'autre), à l'aide du facteur de correction C3 (dont la valeur C3_1t est faible, par exemple égale à 1, du fait du faible angle de flèche. Ainsi à faible vitesse du véhicule, et pour un petit angle de flèche, le conducteur peut rapidement tourner les roues du véhicule puisque le risque de basculement est limité.

Inversement, pour un angle de flèche proche de Af_max, le rapport de direction R est calculé en corrigeant la valeur de R1 (qui est alors proche de ou égale à R1_1t, ce qui correspond à une nécessité d'effectuer seulement 1 tour de volant pour braquer les roues en butée d'un côté à l'autre), à l'aide du facteur de correction C3 (ont la valeur C3_4t est importante, par exemple égale à 4, du fait de l'angle de flèche important.

Le calculateur effectue l'opération R= R1* C3, c'est-à-dire R = R1_1t * 4 de sorte que la valeur du rapport de direction à appliquer correspond à la nécessité d'effectuer 4 tours de volant pour braquer les roues en butée d'un côté et de l'autre.

Ainsi, bien que la vitesse du véhicule soit faible, lorsque l'angle de flèche est augmenté, le rapport de direction est augmenté pour limiter le risque de renversement qui résulte de l'angle de flèche important.

En outre, lorsque la vitesse du véhicule augmente par exemple à proximité de Vv_max et pour un angle de flèche proche de Af_max, le rapport de direction R est calculé en corrigeant la valeur de R1 (qui est alors proche de ou égale à R1_4t, ce qui correspond à une nécessité d'effectuer 4 tours de volant pour braquer les roues en butée d'un côté à l'autre), à l'aide du facteur de correction C3 (dont la valeur C3_4t est importante, par exemple égale à 4, du fait de l'angle de flèche important.

Le rapport de direction est ainsi encore augmenté pour limiter le risque de renversement du fait de la combinaison de l'augmentation de vitesse du véhicule et de l'augmentation de l'angle de flèche.

On peut prévoir que la prise en compte du facteur de correction C3 s'applique sur toute la plage de vitesse de déplacement du véhicule ou sur une partie seulement. Selon un mode de réalisation, l'influence de l'angle de flèche sur le rapport de direction n'est activée qu'à partir d'une vitesse donnée du véhicule et/ou à partir d'un angle de flèche donné.

La modification du rapport peut aussi tenir compte d'un paramètre de manipulation du volant et de la vitesse de déplacement du véhicule comme expliqué ci-avant.

Ainsi, selon un mode de réalisation le rapport de direction R à appliquer est calculé par la formule :

$$R = R1 * C2 * C3$$

C2 est le facteur de correction fonction de la valeur angulaire du volant. Dans l'exemple de la figure 4, qui est un graphique donnant la courbe du coefficient de correction C2 en fonction de la vitesse angulaire du volant, notée Va, le coefficient de correction C2 diminue lorsque la vitesse angulaire Va du volant augmente. La décroissance peut être linéaire ou non (notamment de forme concave ou convexe) comme l'illustrent les différentes allures de courbes représentées en pointillé.

Le module de commande calcule alors le rapport de direction R à appliquer en corrigeant le rapport de direction R1 principal défini en fonction de la vitesse Vv du véhicule (figure 3) par le coefficient de correction C2 qui est défini en fonction de la vitesse angulaire du volant (figure 4) et par le coefficient C3 (figure 5) défini ci-avant.

Ainsi, à titre d'exemple, pour un angle de flèche donné, une vitesse donnée du véhicule, et lorsque le conducteur tourne lentement son volant, par exemple pour une valeur Va inférieure à Va_min, le rapport de direction R est calculé en corrigeant la valeur de R1 à l'aide du facteur de correction C3 et du facteur de correction C2 dont la valeur proche de C2_4t est importante, par exemple égale à 4, du fait de la lente vitesse de pivotement du volant.

La valeur de Va_min peut être comprise entre 0 et 2 tours par seconde, préférentiellement entre 0 et 1 tours par seconde, ou entre 0.1 et 0.5 tours par seconde. A titre d'exemple on peut choisir Va_min comprise entre 0 et 0.2 tour par seconde.

Inversement, pour un angle de flèche donné, une vitesse donnée du véhicule, et lorsque le conducteur tourne rapidement son volant, par exemple pour une valeur Va proche de Va_max, le rapport de direction R est calculé en corrigeant la valeur de R1 à l'aide du facteur de correction C3 et du facteur de correction C2 dont la valeur C2_1t est faible, par exemple égale à 1, du fait de la grande vitesse de pivotement du volant.

Le calculateur effectue l'opération R= R1* C2, c'est-à-dire R = R1_1t * 1 de sorte que la valeur rapport de direction à appliquer correspond à la nécessité d'effectuer 1 tour de volant pour braquer les roues en butée d'un côté et de l'autre.

Ainsi, l'opérateur peut, en tournant rapidement le volant, manoeuvrer rapidement pour effectuer à faible vitesse de déplacement du véhicule des trajets d'un point à un autre, ce qui est particulièrement utile dans le cas d'un chargement ou déchargement entre deux zones proches. En effet, il n'a pas besoin d'effectuer un grand nombre de tour de volant pour manoeuvrer son véhicule. A l'inverse il peut manier précisément le véhicule en pivotant doucement le volant pour se positionner correctement devant la zone souhaitée.

On peut prévoir que la prise en compte du facteur de correction C2 s'applique sur toute la plage de vitesse de déplacement du véhicule ou sur une partie seulement. Les plages de prise en compte des coefficients de correction C2 et C3 peuvent ou non se recouvrir, totalement ou partiellement.

Avantageusement, le véhicule comprend aussi un capteur de charge C6 configuré pour déterminer la charge à, ou au voisinage de, l'extrémité du bras 6 télescopique. Le module de commande 102 du rapport de direction est alors configuré pour modifier le rapport de direction R en fonction de ladite charge déterminée, ce qui permet d'augmenter le rapport de direction en cas de charge supérieure à une valeur seuil.

Une telle configuration du module de commande permet de réduire le risque de basculement du véhicule et d'améliorer la précision de positionnement du véhicule, notamment lorsque le conducteur tourne lentement le volant pour déplacer précisément le véhicule, tout en facilitant la manoeuvre du véhicule lorsque le conducteur tourne rapidement le volant pour notamment changer de direction.

Comme expliqué ci-dessus, selon un mode de réalisation particulier, le module de commande 102 du rapport de direction R est configuré de manière à modifier le rapport de direction R en tenant compte de l'angle de flèche et de la vitesse de déplacement du véhicule. Le module de commande 102 du rapport de direction R peut être configuré de manière à modifier le rapport de direction R en tenant compte aussi de la longueur du bras et/ou de la charge en bout de bras, et éventuellement de la vitesse angulaire du volant. La vitesse de déplacement du véhicule est transmise au module de commande 102 par le calculateur 101 du véhicule. De même les autres paramètres peuvent être obtenus à l'aide du calculateur et des capteurs associés, puis ces paramètres peuvent être transmis au module de commande.

Le véhicule comprend un système de traitement et de calcul électronique et/ou informatique 100 qui comprend le premier calculateur 101 configuré pour traiter les données issues des capteurs et piloter les actionneurs électriques du véhicule. Un deuxième calculateur 102 est connecté au premier calculateur 101. Ledit module de commande du rapport de direction est implémenté dans ledit deuxième calculateur 102. En variante, ledit premier calculateur et le deuxième calculateur peuvent être réalisés sous la forme d'une même unité de traitement électronique et/ou informatique, c'est-à-dire sous la forme d'un même calculateur.

Le dispositif 20 de transmission de direction est de type hydraulique. Selon un mode de réalisation illustré la figure 1, le dispositif 20 de transmission de direction comprend un circuit de direction hydraulique mis en pression par une pompe 19, encore appelée pompe accessoire. Le dispositif 20 de transmission de direction comprend un système de vérin hydraulique 14 couplé aux roues directrices 11. Le système de vérin hydraulique comprend des vérins hydrauliques permettant de diriger les roues dans un sens ou un autre et d'un angle de direction donné en fonction de la rotation du volant. Dans l'exemple illustré aux figures, les roues avant et les roues arrière sont directrices de sorte que le système de vérin comprend deux vérins. En variante, lorsque seules les roues avant sont directrices on peut prévoir que le système de vérin comprend un seul vérin.

Le véhicule comprend aussi un distributeur hydraulique 13, qui forme une vanne de priorité, afin de garantir un débit disponible suffisant dans le circuit hydraulique de direction par rapport aux autres fonctions hydrauliques accessoires.

Une pompe de direction 12, formée par une vanne 3-voies, est couplée au volant 10 de manière à délivrer un débit de liquide de direction, fourni par la pompe accessoire 19, en fonction d'un paramètre relatif au bras télescopique, de préférence de la vitesse de déplacement du véhicule, et éventuellement de la vitesse de rotation du volant. La pompe de direction 12 dirige le liquide de direction délivré par la pompe accessoire 19 d'un côté ou de l'autre de chacun des vérins 14 en fonction du sens de rotation du volant 10.

Le véhicule comprend aussi une électrovanne proportionnelle 15 commandable par le module de commande 102 pour commander l'ajout d'un débit de liquide de direction supplémentaire dans le circuit hydraulique en fonction du rapport de direction défini par le module de commande.

L'électrovanne proportionnelle peut être logée avec la pompe de direction au sein d'un même boîtier 17 appelé orbitrol, ou être disposée à un autre endroit sur le circuit hydraulique entre la pompe de direction et le système de vérin.

Le module de commande 102 détermine le rapport de direction à appliquer en fonction du ou des paramètres déterminés par le ou les capteurs comme expliqué ci-dessus, et commande alors, par exemple par l'intermédiaire du calculateur 101 de gestion du véhicule, l'activation de l'électrovanne proportionnelle de manière à injecter dans le système de vérins hydrauliques 14 un débit de liquide correspondant au rapport de direction calculé.

On peut prévoir que le véhicule comprend des moyens d'inactivation permettant d'inactiver le module de commande 102 du rapport de direction de sorte que le rapport de direction est le rapport de direction défini par défaut. Par exemple, l'inactivation peut être commandée suite à la détection d'un dysfonctionnement du véhicule.

Le système de traitement et de calcul, ou encore le ou chaque calculateur, peut être réalisé sous la forme de composants électroniques et/ou d'un processeur informatique, par exemple de type microprocesseur ou microcontrôleur. Le module de commande du rapport de direction peut alors être réalisé sous la forme de programmes implémentés qui comprennent des instructions informatiques permettant de réaliser leur fonction, ou sous la forme de composant électroniques dédiés.

Ces programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent aussi être exécutés à partir de périphériques de stockage de programme.

Avantageusement, on peut prévoir que le rapport de direction puisse atteindre ou être fixé à une certaine valeur jusqu'à une vitesse donnée de déplacement du véhicule, puis d'augmenter le rapport de direction R à mesure que la vitesse de déplacement augmente pour tendre vers un rapport de direction par défaut. On entend par rapport de direction par défaut le rapport de direction qui résulte de la construction du véhicule sans activation du module de commande du rapport. Une telle conception facilite la manoeuvre du véhicule à l'arrêt ou à faible vitesse de déplacement, tout en conservant une sécurité et un confort de conduite à plus haute vitesse pour limiter la nervosité du véhicule.

On remarquera que le rapport de direction est défini par convention comme étant égal à Alpha / Beta mais le rapport de direction pourrait en variante être défini comme étant égal à Beta/Alpha, ce qui ne change pas le fait que le rapport de direction est modifié en fonction d'un paramètre relatif au bras télescopique, dont l'angle de flèche et optionnellement la longueur du bras télescopique. Bien entendu, les formules de calcul du rapport de direction selon les différents modes de réalisation doivent alors être adaptées à la convention retenue.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

**1.** Véhicule roulant à bras (6) télescopique inclinable, le véhicule comprenant :

- des roues directrices (11) ;
- un volant (10) de direction ;
- un dispositif (20) de transmission de direction permettant de transmettre le mouvement de direction entre le volant (10) et les roues directrices (11) selon un rapport de direction R = Alpha / Beta avec Beta l'angle de braquage des roues, et Alpha l'angle de braquage du volant ;

**caractérisé en ce que** ledit véhicule comprend un système de modification du rapport de direction qui comprend :

- un capteur configuré pour déterminer un paramètre relatif au bras télescopique, le capteur étant un capteur de l'angle (Af) formé par le bras télescopique avec le plan d'appui au sol des roues du véhicule,
- un module de commande (102) du rapport de direction configuré pour calculer le rapport de direction R en fonction dudit paramètre relatif au bras télescopique, ledit paramètre relatif au bras télescopique étant l'angle (Af) formé par le bras télescopique avec le plan d'appui au sol des roues du véhicule,

et le module de commande (102) du rapport de direction étant configuré pour calculer le rapport de direction R en fonction aussi de la vitesse de déplacement du véhicule, en augmentant le rapport de direction R à mesure que la vitesse de déplacement augmente pour tendre vers le rapport de direction par défaut,
le rapport de direction par défaut étant le rapport de direction qui résulte de la construction du véhicule sans activation du module de commande du rapport de direction.

**2.** Véhicule selon la revendication 1, **caractérisé en ce que**, ledit système comprenant un capteur de charge configuré pour déterminer la charge à, ou au voisinage de, l'extrémité du bras (6) télescopique, le module de commande (102) du rapport de direction est configuré pour calculer le rapport de direction R en fonction de ladite charge déterminée.

**3.** Véhicule selon l'une des revendications précédentes, **caractérisé en ce que**, ledit système comprenant un capteur (C10) de l'angle de direction du volant, le module de commande (102) du rapport de direction R est aussi configuré pour calculer le rapport de direction en fonction d'un paramètre de manipulation du volant, de préférence calculé à partir de l'angle de direction du volant.

**4.** Véhicule selon la revendication 3, **caractérisé en ce que** ledit paramètre de manipulation du volant comprend la vitesse angulaire du volant (10).

**5.** Véhicule selon l'une des revendications 3 à 4, **caractérisé en ce que** ledit paramètre de manipulation du volant comprend l'accélération angulaire du volant (10).

**6.** Véhicule selon l'une des revendications 3 à 5, **caractérisé en ce que** ledit paramètre de manipulation du volant comprend la position angulaire du volant (10) et/ou la course angulaire parcourue continûment.

**7.** Véhicule selon l'une des revendications précédentes, **caractérisé en ce que** le module de commande (102) du rapport de direction (R) est configuré de manière à calculer le rapport de direction (R) en fonction de l'enfoncement de la pédale d'accélération.

**8.** Véhicule selon l'une des revendications précédentes, **caractérisé en ce que** le dispositif (20) de transmission de direction comprend un circuit hydraulique.

**9.** Véhicule selon la revendication 8, **caractérisé en ce que** le circuit hydraulique comporte :

- une pompe (19), encore appelée pompe accessoire, permettant de mettre en pression le circuit hydraulique ;
- un système de vérin hydraulique (14) couplé aux roues directrices (11) ;
- une pompe de direction (12) permettant de diriger le liquide de direction d'un côté ou de l'autre du ou de chaque vérin du système de vérin hydraulique (14) en fonction de la rotation du volant ;
- un système d'ajout de débit, de préférence une électrovanne proportionnelle (15), commandable par le module de commande (102) pour ajouter un débit supplémentaire de liquide de direction dans le circuit hydraulique en fonction du rapport de direction défini par le module de commande.

## Patentansprüche

**1.** Fahrendes Fahrzeug mit neigbarem Teleskoparm, wobei das Fahrzeug umfasst:

- Lenkräder (11);
- ein Lenkrad (10);

- eine Lenkübertragungsvorrichtung (20), die gestattet, die Lenkbewegung zwischen dem Lenkrad (10) und den Lenkrädern (11) gemäß dem Lenkverhältnis R = Alpha/Beta mit Beta als Lenkeinschlagwinkel der Räder und Alpha als Lenkeinschlagwinkel des Lenkrads zu übertragen;

**dadurch gekennzeichnet, dass** das Fahrzeug ein System zum Ändern des Lenkverhältnisses umfasst, das umfasst:

- einen Sensor, der ausgelegt ist, um einen Parameter in Relation zum Teleskoparm zu bestimmen, wobei der Sensor ein Sensor des Winkels (Af) ist, der vom Teleskoparm mit der Stützebene auf dem Boden der Räder des Fahrzeugs gebildet wird,
- ein Steuermodul (102) des Lenkverhältnisses, das ausgelegt ist, um das Lenkverhältnis R in Abhängigkeit von dem Parameter in Relation zum Teleskoparm zu berechnen,

wobei der Parameter in Relation zum Teleskoparm der Winkel (Af) ist, der von dem Teleskoparm mit der Stützebene auf dem Boden der Räder des Fahrzeugs gebildet wird,
und wobei das Steuermodul (102) des Lenkverhältnisses ausgelegt ist, um das Lenkverhältnis R auch in Abhängigkeit von der Fahrgeschwindigkeit des Fahrzeugs zu berechnen, wobei das Lenkverhältnis R in dem Maß vergrößert wird, wie sich die Fahrgeschwindigkeit erhöht, um sich in Richtung des Standard-Lenkverhältnis zu bewegen, wobei das Standard-Lenkverhältnis das Lenkverhältnis ist, das sich aus der Konstruktion des Fahrzeugs ohne Aktivierung des Steuermoduls des Lenkverhältnisses ergibt.

2. Fahrzeug nach Anspruch 1, **dadurch gekennzeichnet, dass**, wobei das System einen Lastsensor umfasst, der ausgelegt ist, um die Last am oder in der Nähe des Endes des Teleskoparms (6) zu bestimmen, das Steuermodul (102) des Lenkverhältnisses ausgelegt ist, um das Lenkverhältnis R in Abhängigkeit von der bestimmten Last zu berechnen.

3. Fahrzeug nach einem der vorangehenden Ansprüche, **dadurch gekennzeichnet, dass**, wobei das System einen Sensor (C10) des Lenkwinkels des Lenkrads umfasst, das Steuermodul (102) des Lenkverhältnisses R ebenfalls ausgelegt ist, um das Lenkverhältnis in Abhängigkeit von einem Bedienparameter des Lenkrads zu berechnen, der vorzugsweise ausgehend vom Lenkwinkel des Lenkrads berechnet wurde.

4. Fahrzeug nach Anspruch 3, **dadurch gekennzeichnet, dass** der Bedienparameter des Lenkrads die Winkelgeschwindigkeit des Lenkrads (10) umfasst.

5. Fahrzeug nach einem der Ansprüche 3 bis 4, **dadurch gekennzeichnet, dass** der Bedienparameter des Lenkrads die Winkelbeschleunigung des Lenkrads (10) umfasst.

6. Fahrzeug nach einem der Ansprüche 3 bis 5, **dadurch gekennzeichnet, dass** der Bedienparameter des Lenkrads die Winkelposition des Lenkrads (10) und/oder den ununterbrochen zurückgelegten Winkelweg umfasst.

7. Fahrzeug nach einem der vorangehenden Ansprüche, **dadurch gekennzeichnet, dass** das Steuermodul (102) des Lenkverhältnisses (R) derart ausgelegt ist, dass das Lenkverhältnis (R) in Abhängigkeit vom Niederdrücken das Gaspedals berechnet wird.

8. Fahrzeug nach einem der vorangehenden Ansprüche, **dadurch gekennzeichnet, dass** die Lenkübertragungsvorrichtung (20) einen Hydraulikkreis umfasst.

9. Fahrzeug nach Anspruch 8, **dadurch gekennzeichnet, dass** der Hydraulikkreis aufweist:

- eine auch als Hilfspumpe bezeichnete Pumpe (19), die erlaubt, den Hydraulikkreis unter Druck zu setzen;
- ein Hydraulikzylindersystem (14), der an die Lenkräder (11) gekoppelt ist;
- eine Richtungspumpe (12), die erlaubt, die Lenkflüssigkeit von einer Seite oder der anderen des oder jedes Zylinders des Hydraulikzylindersystems (14) in Abhängigkeit von der Drehung des Lenkrads zu lenken;
- ein System für die Zugabe von Durchsatz, vorzugsweise ein Proportional-Magnetventil (15), das von dem Steuermodul (102) steuerbar ist, um einen zusätzlichen Durchsatz von Lenkflüssigkeit in den Hydraulikkreis in Abhängigkeit von dem vom Steuermodul definierten Lenkverhältnis hinzuzufügen.

**Claims**

1. A rolling vehicle with a tilting telescoping arm (6), the vehicle comprising:

- guide wheels (11);
- a steering wheel (10);

- a steering transmission device (20) making it possible to transmit the steering movement between the steering wheel (10) and the guide wheels (11) according to a steering ratio R = Alpha / Beta with Beta the steering angle of the guide wheels, and Alpha the steering angle of the steering wheel;

**characterized in that** said vehicle comprises a steering ratio modification system that comprises:

- a sensor configured to determine a parameter relative to the telescoping arm, the sensor being a sensor of the angle (Af) formed by the telescoping arm with the bearing plane on the ground of the wheels of the vehicle,
- a control module (102) for controlling the steering ratio configured to calculate the steering ratio R as a function of said parameter relative to the telescoping arm, said parameter relative to the telescoping arm being the angle (Af) formed by the telescoping arm with the bearing plane on the ground of the wheels of the vehicle,

and the control module (102) for controlling the steering ratio being configured to calculate the steering ratio R also as a function of the movement speed of the vehicle, by increasing the steering ratio R as the movement speed increases to tend toward the default steering ratio,
the default steering ratio being the steering ratio that results from the construction of the vehicle without activating the steering ratio control module.

2. The vehicle according to claim 1, **characterized in that**, said system comprising a load sensor configured to determine the load at or near the end of the telescoping arm (6), the control module (102) for controlling the steering ratio is configured to calculate the steering ratio R as a function of said determined load.

3. The vehicle according to one of the preceding claims, **characterized in that**, said system comprising a sensor (C10) of the steering angle of the steering wheel, the control module (102) for controlling the steering ratio R is also configured to calculate the steering ratio as a function of a handling parameter of the steering wheel, preferably calculated from the steering angle of the steering wheel.

4. The vehicle according to claim 3, **characterized in that** said handling parameter of the steering wheel comprises the angular speed of the steering wheel (10).

5. The vehicle according to one of claims 3 to 4, **characterized in that** said handling parameter of the steering wheel comprises the angular acceleration of the steering wheel (10).

6. The vehicle according to one of claims 3 to 5, **characterized in that** said handling parameter of the steering wheel comprises the angular position of the steering wheel (10) and/or the angular stroke continuously traveled.

7. Vehicle according to one of the preceding claims, **characterized in that** the control module (102) for controlling the steering ratio (R) is configured so as to calculate the steering ratio (R) as a function of the depression of the accelerator pedal.

8. The vehicle according to one of the preceding claims, **characterized in that** the steering transmission device (20) comprises a hydraulic circuit.

9. The vehicle according to claim 8, **characterized in that** the hydraulic circuit includes:

- a pump (19), also called accessory pump, allowing pressurization of the hydraulic circuit;
- a hydraulic jack system (14) coupled to the guide wheels (11);
- a steering pump (12) making it possible to orient the steering fluid on one side or the other of each jack of the hydraulic jack system (14) based on the rotation of the steering wheel;
- a flow addition system, preferably a proportional valve (15), controllable by the control module (102) to add an additional steering fluid flow into the hydraulic circuit as a function of the steering ratio defined by the control module.

EP 3 356 283 B2

**FIG.1**

11

**FIG.2**

**FIG.3**

**FIG.4**

**FIG.5**

**RÉFÉRENCES CITÉES DANS LA DESCRIPTION**

**Documents brevets cités dans la description**

- EP 1593642 A2